# EUROPÄISCHE PATENTSCHRIFT

(11) **EP 3 753 622 B1**
(45) Veröffentlichungstag und Bekanntmachung des Hinweises auf die Patenterteilung: **13.04.2022**
(21) Anmeldenummer: 19180450.9
(22) Anmeldetag: 17.06.2019
(51) Int. Cl.: B01D 33/11, B01D 33/41, B01D 33/50

(54) **FILTEREINHEIT UND FILTRATIONSANLAGE**
FILTER UNIT AND FILTRATION ASSEMBLY
UNITÉ FILTRANTE ET INSTALLATION DE FILTRATION

(43) Veröffentlichungstag der Anmeldung: 23.12.2020
(73) Patentinhaber: Gerum GmbH, 5020 Salzburg (AT)
(72) Erfinder: Gerganoff, Konstantin, 80639 München (DE)
(74) Vertreter: Wächter, Jochen

(56) Entgegenhaltungen:
- EP-A1- 3 391 949
- CH-A- 306 631
- CN-U- 203 123 668
- DE-B- 1 144 691
- US-A- 5 433 849

## Beschreibung

Die vorliegende Erfindung betrifft eine Filtereinheit zum Filtern einer Flüssigkeit sowie eine Filtrationsanlage umfassend eine solche Filtereinheit.

Filtereinheiten bzw. Filtrationsanlagen filtern Festkörper, Partikel und Schwebstoffe aus einer zu filternden Flüssigkeit. Sie kommen z.B. in Kläranlagen (v.a. als dritte und i.d.R. letzte Reinigungsstufe), Trinkwasseranlagen und in industriellen Anwendungen z.B. zur Rückgewinnung von Materialien aus Flüssigkeiten oder zum Filtern von Kühlwasser zum Einsatz. Ebenso ist es möglich, mittels einer Filtereinheit bzw. Filtrationsanlage Algen aus Wasser zu entfernen oder Trinkwasser aufzubereiten.

Beispielsweise ist aus der EP 3 391 949 A1 eine Filtrationsanlage mit einer Filtereinheit bekannt, die in einem Becken angeordnet ist und die einen Träger umfasst, an dessen Umfang eine Mehrzahl von Siebelementen angeordnet ist. Der Träger ist um ein Zulaufrohr für die Zuführung von zu reinigendem Rohwasser drehbar gelagert. Das zu reinigende Rohwasser wird der Filtereinheit radial innerhalb der Siebelemente zugeführt und strömt durch die Siebelemente in das die Filtereinheit umgebende Becken. Um die zum Filtern zur Verfügung stehende Oberfläche zu vergrößern, sind jeweils zwei Siebelemente der Filtereinheit derart angeordnet, dass sie sich vom Umfang des Trägers nach außen erstrecken und sich in einer nach außen gerichteten Spitze treffen. Die Filtereinheit weist dadurch eine Sternform auf.

Es hat sich bei derartigen Filtrationsanlagen als nachteilig erwiesen, dass die Siebelemente auch bei dieser Anordnung schnell verschmutzen können. Dadurch verringert sich zum einen die Effizienz der Anlage und zum anderen werden die Siebelemente dadurch stark beansprucht, insbesondere wenn sich die Druckdifferenz zwischen dem Zulauf und dem Becken bzw. einem Ablauf aus dem Becken aufgrund der Verschmutzung erhöht. Reißt ein Siebelement, gelangt verunreinigte, noch zu filternde Flüssigkeit in das die Filtereinheit umgebende Becken (Klarwasserbereich) und kontaminiert die darin enthaltene, bereits gefilterte Flüssigkeit.

Es ist daher die Aufgabe der vorliegenden Erfindung, eine effizientere und zuverlässigere Filtereinheit bzw. Filtrationsanlage bereitzustellen.

Diese Aufgabe wird durch den Gegenstand der Ansprüche 1 bzw. 13 gelöst.

Erfindungsgemäß umfasst eine Filtereinheit zum Filtern einer Flüssigkeit einen Träger, der um eine Drehachse drehbar gelagert ist und eine Mehrzahl von entlang seines Umfangs angeordneten Trägersegmenten umfasst. In jeweils einem Trägersegment der Mehrzahl von Trägersegmenten sind zwei erste Siebelemente derart angeordnet, dass sie sich jeweils vom Umfang des Trägers nach außen erstrecken und sich mit in radialer Richtung bezüglich der Drehachse zunehmendem Abstand vom Umfang des Trägers einander annähern. Weiterhin ist in jedem Trägersegment der Mehrzahl von Trägersegmenten ein zweites Siebelement angeordnet, das sich entlang des Umfangs des Trägers erstreckt, sodass die zwei ersten Siebelemente und das zweite Siebelement eines Trägersegments in einem Dreieck angeordnet sind. Die Porengröße des zweiten Siebelements ist dabei größer als die Porengröße der ersten Siebelemente, wobei die Porengröße der ersten und zweiten Siebelemente definiert ist als der Durchmesser der größten sphärischen Kugel, die gerade noch durch die Poren des jeweiligen Siebelements hindurchtreten kann.

Auf diese Weise wird eine Filtereinheit bereitgestellt, bei der in radialer Richtung bezüglich der Drehachse zunächst ein zweites Siebelement vorgesehen ist, um größere Festkörper, Partikel und Schwebstoffe aus der Flüssigkeit zu filtern, bevor diese zu den ersten Siebelementen gelangen können. Dadurch werden die ersten Siebelemente entlastet, wodurch ihre Einsatzzeit und die Durchflussmenge erhöht werden kann. Zudem wird die Sicherheit der Filtereinheit erhöht, da bei einem Reißen eines durch größere Partikel beaufschlagten zweiten Siebelements weiterhin ein Filtern der Flüssigkeit durch die ersten Siebelemente erfolgt. Es kann daher keine ungefilterte Flüssigkeit in ein die Filtereinheit umgebendes Becken gelangen. Die ersten Siebelemente sind wiederum sternförmig angeordnet, um die zum Filtern zur Verfügung stehende Oberfläche zu vergrößern. Außerdem ist ein höherer Strömungsdruck der in die Filtereinheit eintretenden, zu reinigenden Flüssigkeit möglich.

Die ersten und zweiten Siebelemente sind derart ausgebildet und am Träger angebracht, dass ein Flüssigkeitsstrom von einem bezüglich der Drehachse radial innerhalb der ersten und zweiten Siebelemente angeordneten Einlass in ein radial außerhalb angeordnetes Becken zumindest durch ein zweites und ein erstes Siebelement führt. Im Übrigen ist die Filtereinheit derart abgedichtet, dass ein Flüssigkeitsstrom von radial innerhalb der Siebelemente nach radial außerhalb der Siebelemente nicht möglich ist.

Jedes erste und zweite Siebelement kann einteilig oder mehrteilig ausgebildet sein. Die ersten Siebelemente eines Trägersegments können auch durch ein einziges Siebelement mit entsprechend angeordneten Abschnitten gebildet sein. In mehreren in Umfangsrichtung des Trägers nebeneinander angeordneten Trägersegmenten kann anstelle jeweils eines zweiten Siebelements auch ein gemeinsames zweites Siebelement angeordnet sein. Die ersten und zweiten Siebelemente können optional Mittel zur Befestigung am Träger oder an geeigneten Rahmenstrukturen aufweisen.

Der Träger weist vorzugsweise einen Durchmesser zwischen 0,5 m und 2,5 m, bevorzugt zwischen 1,0 m und 2,0 m auf. Die Dimensionen des Trägers können an den jeweiligen Anwendungsfall angepasst werden. Dabei ist zu berücksichtigen, dass mit zunehmendem Durchmesser des Trägers die Anzahl an Trägersegmenten und somit an Siebelementen erhöht werden kann und dadurch eine größere Oberfläche zum Filtern zur Verfügung steht. Um den Bauraum in radialer Richtung zu reduzieren ist es auch denkbar, die Filtereinheit in axialer Richtung zu erweitern. Z.B. können mehrere Filtereinheiten in axialer Richtung hintereinander eingesetzt werden, kann eine Filtereinheit mit mehreren axial zueinander ausgerichteten Trägern ausgestattet sein oder kann ein Träger mit einer Mehrzahl von in axialer Richtung hintereinander angeordneten Siebelementen versehen sein.

Um eine möglichst gründliche Filterung zu erreichen, beträgt die Porengröße der ersten Siebelemente in einer Ausführungsform vorzugsweise zwischen 3 µm und 150 µm, bevorzugt zwischen 5 µm und 100 µm, mehr bevorzugt zwischen 5 µm und 20 µm.

Vorzugsweise beträgt die Porengröße eines zweiten Siebelements zwischen 40 µm und 200 µm, bevorzugt zwischen 80 µm und 150 µm, um entsprechende größere Partikel zuverlässig durch das zweite Siebelement zu erfassen und von den ersten Siebelementen abzuhalten. Auch die Porengröße der zweiten Siebelemente kann an die im jeweiligen Anwendungsfall bzw. Einsatzbereich gegebenen Anforderungen angepasst werden, insbesondere in Abhängigkeit von der Porengröße der ersten Siebelemente.

Es hat sich als besonders vorteilhaft herausgestellt, wenn die Porengröße des zweiten Siebelements eines Trägersegments das 2- bis 8-fache, vorzugsweise das 3- bis 6-fache, mehr bevorzugt das 3,5- bis 4,5-fache der Porengröße der ersten Siebelemente des Trägersegments beträgt.

In einer bevorzugten Ausführungsform weisen die zwei ersten Siebelemente eines Trägersegments dieselbe Porengröße auf. Dadurch wird eine gleichmäßige Filterung der zu filternden Flüssigkeit erreicht. Zudem resultiert daraus ein besonders einfacher Aufbau der Filtereinheit. Durch die Verwendung einer größeren Stückzahl von ersten Siebelementen gleicher Porengröße können weiterhin die Herstellkosten der Filtereinheit reduziert werden.

Um möglichst gleichmäßig ausgebildete Siebelemente zu erhalten und somit eine zuverlässige Filtration von Partikeln bestimmter Größe zu ermöglichen, ist es bevorzugt, dass die Poren der ersten und zweiten Siebelemente einen rechteckigen Umriss, insbesondere einen quadratischen Umriss, aufweisen. Der Umriss wird dabei in einem Querschnitt parallel zur Ebene des jeweiligen Siebelements betrachtet. Bei einem rechteckigen Umriss der Poren ist für die Porengröße die kleinste Seitenlänge des Rechtecks maßgebend.

Bei dieser Betrachtung ist es jedoch denkbar, dass eine Seitenlänge des rechteckigen Umrisses der Poren viel größer ist als die für die Porengröße maßgebende Seitenlänge. Es ist daher bevorzugt, dass die Seiten des rechteckigen Umrisses der Poren eine sich nur geringfügig unterscheidende Seitenlänge, insbesondere eine gleiche Seitenlänge aufweisen, um den Durchtritt von sehr schmalen aber langen Festkörpern, Partikeln und Schwebstoffen zu vermeiden. In einer bevorzugten Ausführungsform weisen die Poren der ersten und zweiten Siebelemente daher einen quadratischen Umriss auf.

Vorzugsweise umfassen die ersten und zweiten Siebelemente ein Gewebe. Ein Gewebe ist verhältnismäßig einfach und besonders gleichmäßig herstellbar und stellt zugleich einen rechteckigen Umriss der Poren der ersten und zweiten Siebelemente bereit. Bevorzugt ist das jeweilige Gewebe aus Rundfäden gebildet.

Für die möglichen Einsatzgebiete der Filtereinheit hat es sich als vorteilhaft erwiesen, wenn das Gewebe aus Edelstahl oder aus Kunststoff, vorzugsweise aus säurefestem, möglichst reißfestem Kunststoff, gebildet ist. Edelstahl ist besonders widerstandsfähig, hygienisch, einfach zu reinigen und einfach handzuhaben. Als Edelstahl kommt z.B. AISI 316 L in Frage. Ein Kunststoffgewebe kann günstig hergestellt werden, weist ein geringes Gewicht auf, ist besonders flexibel und somit einfach in die Filtereinheit zu integrieren. Als Kunststoff kann beispielsweise Polyester verwendet werden. Alternative Materialien können vom Fachmann in Anbetracht des jeweiligen Einsatzzwecks gewählt werden.

In einer besonders bevorzugten Ausführungsform ist in jedem Trägersegment der Mehrzahl von Trägersegmenten ein Siebrahmen angeordnet, der einen dreieckigen Querschnitt mit einer bezüglich der Drehachse radial nach außen gerichteten Spitze aufweist und der die zwei ersten Siebelemente des jeweiligen Trägersegments umfasst.

Der Siebrahmen dient zur Aufnahme der zwei ersten Siebelemente und zum Anbringen der zwei ersten Siebelemente am Träger. Der Siebrahmen kann die zwei ersten Siebelemente aufspannen und bei Bedarf verstärken bzw. unterstützen, um sie vor Beschädigungen zu schützen. Hierzu kann der Siebrahmen geeignete Stützelemente umfassen.

Vorzugsweise umfasst der Siebrahmen eines Trägersegments auch das zweite Siebelement des Trägersegments. Es sind dann alle Siebelemente eines Trägersegments am Siebrahmen angeordnet, wodurch eine einfache Montage der Filtereinheit ermöglicht wird.

Ist der Siebrahmen eines Trägersegments vorzugsweise lösbar am Träger angebracht, können die ersten Siebelemente und ggf. das zweite Siebelement des Trägersegments einfach demontiert bzw. ausgetauscht werden. Hierzu kann der Siebrahmen mit dem Träger verschraubt oder an den Träger geklemmt sein. Alternative, vorzugsweise einfach lösbare Verbindungsmöglichkeiten sind dem Fachmann bekannt.

Die ersten Siebelemente und optional das zweite Siebelement eines Trägersegments können auf verschiedene Art und Weise am Siebrahmen angebracht sein. Jedes Siebelement kann z.B. ein Rahmenelement umfassen, das in den Siebrahmen eingesetzt und wahlweise lösbar oder unlösbar mit diesem verbunden ist. Die Siebelemente können auch selbst fest mit dem Siebrahmen verbunden werden, z.B. mit diesem verklebt oder in diesen eingegossen werden.

Das zweite Siebelement kann alternativ auch ein Rahmenelement aufweisen, mittels dessen es direkt am Träger befestigt ist. Das zweite Siebelement kann auch in den Träger integriert sein und z.B. einen Teil der Umfangsfläche des Trägers bilden.

Vorzugsweise ist in jedem Trägersegment ein zweites Siebelement vorgesehen. Es kann aber auch ein gemeinsames zweites Siebelement in mehreren in Umfangsrichtung des Trägers nebeneinander angeordneten Trägersegmenten vorgesehen sein. Z.B. kann sich ein zweites Siebelement entlang des Trägers über zwei oder mehr Trägersegmente erstrecken. Es ist auch denkbar, dass sich ein einziges zweites Siebelement entlang des gesamten Umfangs des Trägers und somit über alle Trägersegmente erstreckt. Das zweite Siebelement bildet dann einen Teil der Umfangsfläche des Trägers.

In Umfangsrichtung des Trägers nebeneinander angeordnete Siebrahmen können aneinander angrenzen. Dabei kann zwischen aneinander angrenzenden Siebrahmen eine Dichtung vorgesehen sein, um das Hindurchtreten von Flüssigkeit zwischen den Siebrahmen zu unterbinden. Jeder Siebrahmen kann aber auch in radialer Richtung zum Träger hin mittels einer Dichtung zwischen dem Siebrahmen und dem Träger abgedichtet sein.

Erfindungsgemäß umfasst eine Filtrationsanlage zum Filtern einer Flüssigkeit eine Filtereinheit gemäß der vorliegenden Erfindung, wie sie zuvor beschrieben ist, ein Becken zur Aufnahme einer gefilterten Flüssigkeit, das die Filtereinheit zumindest teilweise umgibt, und einen Einlass zum Zuführen einer zu filternden Flüssigkeit zur Filtereinheit, wobei der Einlass bezüglich der Drehachse des Trägers der Filtereinheit radial innerhalb der ersten und zweiten Siebelemente angeordnet ist.

Auf diese Weise wird eine Filtrationsanlage bereitgestellt, der die eingangs beschriebenen Vorteile der Filtereinheit zu Gute kommen.

Dadurch, dass der Einlass radial innerhalb der Siebelemente angeordnet ist, wird ein Flüssigkeitsstrom vom Einlass durch die Siebelemente hindurch und in das Becken sichergestellt.

Es versteht sich, dass sich der Einlass hierzu nicht zwangsläufig so weit in axialer Richtung erstrecken muss, dass er innerhalb des Trägers angeordnet ist, der einen Zylinder definiert. Vielmehr kann der Einlass auch an einem axialen Ende des Trägers an der Filtereinheit angebracht, z.B. angeflanscht sein und sich nicht in das Innere des Trägers hinein erstrecken. Dennoch ist der Einlass dann in radialer Richtung betrachtet näher an der Drehachse des Trägers angeordnet als die Siebelemente und befindet sich somit radial innerhalb derselben.

Die Filtrationsanlage kann als alleinstehende Einheit ausgebildet sein, insbesondere als alleinstehender Tank, oder in eine Anlage, z.B. eine Kläranlage, integriert sein, sodass das Becken z.B. durch einen Kanal dieser Anlage gebildet ist.

Die gefilterte Flüssigkeit kann dem Becken auf verschiedene Art und Weise entnommen werden. Z.B. kann das Becken einen Auslass zum Ablassen der gefilterten Flüssigkeit aus der Filtrationsanlage umfassen. Das Becken kann aber auch selbst rohr- oder kanalförmig ausgebildet sein, um die gefilterte Flüssigkeit abzulassen.

Es ist bevorzugt, dass der Flüssigkeitspegel im Becken und somit in der Filtereinheit regelbar ist. Hierzu kann die Filtrationsanlage eine Steuervorrichtung und eine Füllstandmesseinrichtung umfassen, um den Flüssigkeitspegel bzw. Füllstand im Becken bzw. in der abgetrennten Zone des Schmutzwasserbereichs zu erfassen. Der Flüssigkeitspegel ist dann insbesondere über die Steuerung des Einlasses und, falls vorhanden, des Auslasses regelbar.

Gemäß einer besonders bevorzugten Ausführungsform umfasst die Filtrationsanlage eine Mehrzahl von Reinigungsdüsen, vorzugsweise Spritzdüsen, zum Reinigen der Siebelemente sowie eine Ablaufrinne. Zumindest eine Reinigungsdüse der Mehrzahl von Reinigungsdüsen ist zum Reinigen der zweiten Siebelemente vorgesehen. Hierzu ist die zumindest eine Reinigungsdüse auf zumindest ein zweites Siebelement gerichtet. Die zumindest eine Reinigungsdüse zum Reinigen der zweiten Siebelemente kann durch eine separate Reinigungsdüse gebildet sein oder durch eine Reinigungsdüse gebildet sein, die auch zum Reinigen zumindest eines ersten Siebelements eingerichtet ist. Die Reinigungsdüsen sind vorzugsweise starr in der Filtrationsanlage gelagert und die Siebelemente werden durch Drehen des Trägers um die Drehachse in den Wirkungsbereich der Reinigungsdüse bewegt, in dem die Reinigungsdüsen auf das jeweilige Siebelement gerichtet sind. Die Reinigungsdüsen können aber auch beweglich, insbesondere schwenkbar gelagert sein.

Die Ablaufrinne ist dazu eigerichtet, mittels der Mehrzahl von Reinigungsdüsen von den Siebelementen entfernte Ablagerungen aufzunehmen und aus der Filtereinheit zu leiten. Die Ablaufrinne ist bezüglich der Drehachse des Trägers der Filtereinheit radial innerhalb der ersten und zweiten Siebelemente angeordnet. Die Mehrzahl von Reinigungsdüsen ist derart ausgerichtet, dass sie auf Siebelemente gerichtet sind, die in einer oberen Hälfte der Filtereinheit angeordnet sind. Bevorzugt befindet sich die Ablaufrinne unterhalb der Siebelemente, auf die die Reinigungsdüsen gerichtet sind. Von den Reinigungsdüsen entfernte Ablagerungen fallen dann nach unten auf die Ablaufrinne. Von dort werden sie aus der Filtereinheit entfernt.

Vorzugsweise ist die zumindest eine Reinigungsdüse, die zum Reinigen der zweiten Siebelemente vorgesehen ist, bezüglich der Drehachse des Trägers der Filtereinheit radial innerhalb der ersten und zweiten Siebelemente angeordnet und an der Ablaufrinne befestigt. Dadurch kann die zumindest eine Reinigungsdüse unmittelbar auf das zweite Siebelement gerichtet werden, ohne dass ein erstes Siebelement zwischen der zumindest einen Reinigungsdüse und dem zweiten Siebelement angeordnet ist. Zudem müssen keine weiteren Befestigungsmittel innerhalb der Filtereinheit zur Aufnahme und Lagerung dieser Reinigungsdüse vorgesehen werden. Weitere Reinigungsdüsen der Mehrzahl von Reinigungsdüsen, insbesondere solche zum Reinigen von ersten Siebelementen, können bezüglich der Drehachse des Trägers der Filtereinheit radial außerhalb der ersten und zweiten Siebelemente angeordnet sein und auf die ersten Siebelemente gerichtet sein.

Es ist weiterhin bevorzugt, dass sich ein höchster zugelassener Flüssigkeitspegel in der Filtrationsanlage bzw. im Becken unterhalb einer oberen Kante der Ablaufrinne befindet. Dadurch wird vermieden, dass die mittels der Mehrzahl von Reinigungsdüsen entfernten Ablagerungen wieder in die zu filternde Flüssigkeit gespült werden und die Siebelemente erneut verschmutzen. Zudem kann dann ein Teil der Mehrzahl von Trägersegmenten oberhalb des Flüssigkeitspegels angeordnet werden, wo die Siebelemente dieser Trägersegmente durch die Mehrzahl von Reinigungsdüsen gereinigt werden.

Um einen besonders guten Wirkungsgrad der Filtrationsanlage bzw. der Filtereinheit sowie eine ausreichend lange Betriebsbereitschaft derselben zu ermöglichen, dreht sich der Träger in gewissen Abständen, um verunreinigte Siebelemente in den Wirkungsbereich der Reinigungsdüsen zu bewegen und gereinigte Siebelemente wieder in die zu reinigende Flüssigkeit zu bewegen.

Z.B. dreht sich der Träger 1- bis 20-mal, vorzugsweise 2- bis 8-mal pro Stunde. Der Träger kann sich schrittweise drehen, sodass sich jeweils eine bestimmte Anzahl von Siebelementen im Wirkungsbereich der Reinigungsdüsen befindet und mit der nächsten Drehung nach einer bestimmten Zeit die in Umlaufrichtung nachfolgenden Siebelemente im Wirkungsbereich der Reinigungsdüsen angeordnet werden. Es ist aber auch denkbar, den Träger für eine vorbestimmte Zeit kontinuierlich zu drehen, um ein Reinigen aller Siebelemente durch die Reinigungsdüsen zu ermöglichen. Z.B. dreht sich der Träger dann 1 bis 2 Minuten und steht anschließend wieder still. Die Drehgeschwindigkeit ist relativ langsam. Die Filtereinheit benötigt vorzugsweise zwischen 1,5 und 2,5 min/Umdrehung.

Das Drehen kann in vorbestimmten zeitlichen Abständen erfolgen oder durch die Steuervorrichtung basierend auf Betriebsparametern, wie z.B. einer Druckdifferenz zwischen dem Einlass und dem Auslass, geregelt werden. Steigt die Druckdifferenz, ist dies ein Anzeichen dafür, dass die Siebelemente verschmutzt sind und eine Reinigung erforderlich ist. Erreicht die Druckdifferenz einen Grenzwert, kann die Steuervorrichtung das Drehen des Trägers veranlassen.

Die Mehrzahl von Reinigungsdüsen ist bevorzugt durch Spritzdüsen gebildet. Die Spritzdüsen geben bevorzugt einen Wasserstrahl mit einem Druck zwischen 0,5 und 1,0 bar in Richtung der jeweils zu reinigenden Siebelemente ab.

Vorzugsweise ist der von jeder Reinigungsdüse abgegebene Strahl in einem Winkel zwischen 3° und 20° zum jeweils zu reinigenden Siebelement ausgerichtet. Dadurch wird ein möglichst zuverlässiges Lösen von Ablagerungen bzw. Verschmutzungen von den Siebelementen gewährleistet, ohne die Partikel durch das zweite Siebelement in Richtung der ersten Siebelemente zu pressen.

Weitere Merkmale und Vorteile der vorliegenden Erfindung ergeben sich aus der nachfolgenden Beschreibung unter Bezugnahme auf die Zeichnungen.
- Fig. 1: zeigt in einer perspektivischen Ansicht die wesentlichen Komponenten einer erfindungsgemäßen Filtrationsanlage.
- Fig. 2: zeigt in einer perspektivischen Detailansicht einen Ausschnitt einer erfindungsgemäßen Filtereinheit.
- Fig. 3: zeigt eine Explosionsansicht des Ausschnitts der Filtereinheit nach Fig. 2.
- Fig. 4: zeigt in einer Schnittansicht einen Ausschnitt eines Gewebes eines Siebelements einer erfindungsgemäßen Filtereinheit.

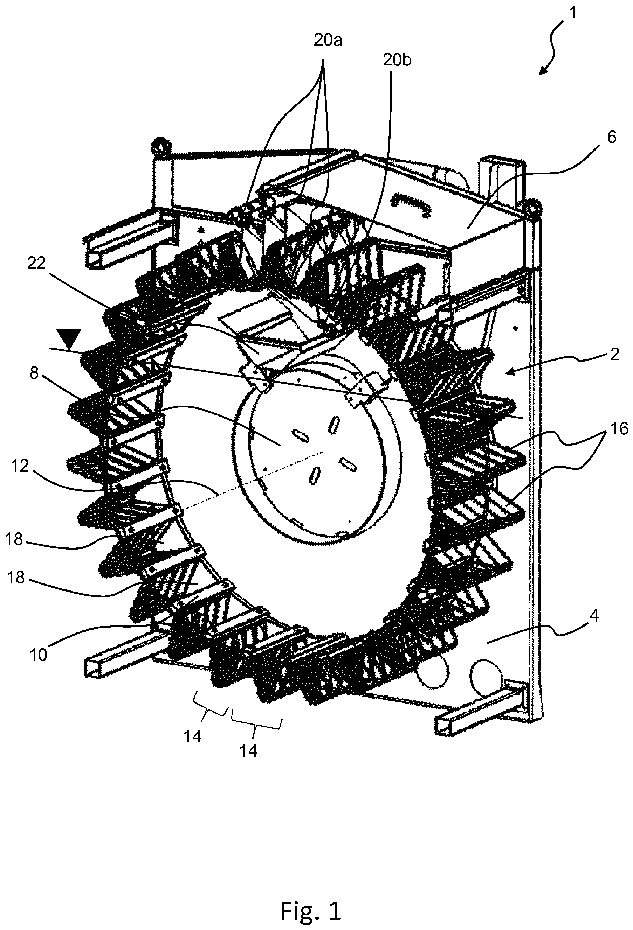

In Fig. 1 sind die wesentlichen Komponenten einer erfindungsgemäßen Filtrationsanlage 1 in einer perspektivischen Ansicht dargestellt.

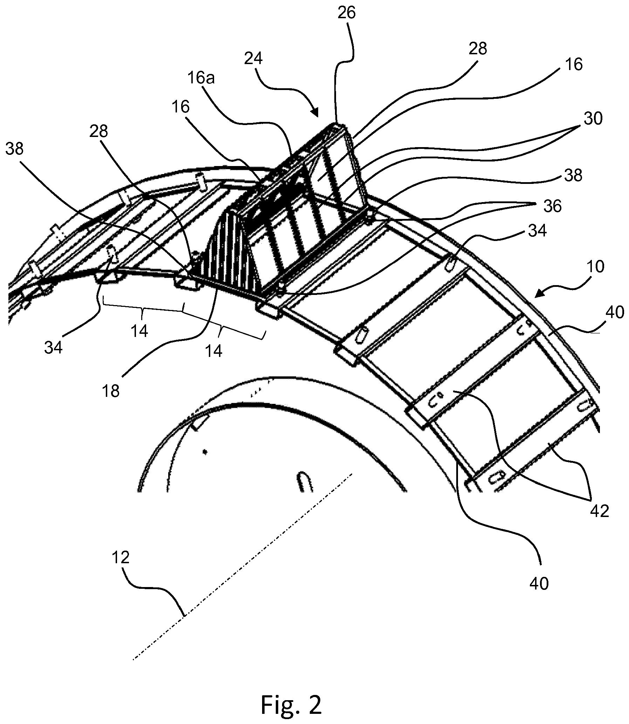

Die Filtrationsanlage 1 umfasst eine Filtereinheit 2, die nachfolgend auch unter Bezugnahme auf die Fig. 2 bis 4 näher beschrieben ist. Zudem umfasst die Filtrationsanlage 1 ein Becken 4 zur Aufnahme einer durch die Filtereinheit 2 gefilterten Flüssigkeit. Das Becken 4 umgibt die Filtereinheit 2 zumindest teilweise.

Ein Flüssigkeitspegel (▼) im Becken 4 bzw. in der Filtereinheit 2 bzw. im Zulaufbecken ist in Fig. 1 schematisch angedeutet. Der Flüssigkeitspegel ist maximal so hoch, dass die Filtereinheit 2 sich nicht vollständig in der Flüssigkeit befindet. Es kann daher ausreichen, wenn das Becken 4 die Filtereinheit 2 nur so weit umgibt, dass ein gewünschter Flüssigkeitspegel im Becken 4 bzw. in der Filtereinheit 2 ermöglicht wird. Das Becken 4 kann z.B. durch einen Tank mit entsprechenden Seitenwänden (hier nicht dargestellt) gebildet sein. Das Becken 4 kann aber auch Teil eines Kanals oder eines Beckens einer Anlage, z.B. einer Kläranlage, sein.

Die Filtrationsanlage 1 kann ferner einen oder mehrere Deckel 6 gegen Spritzwasser und Sprühnebel umfassen, die das Becken 4 abdecken. Die Filtereinheit 2 ist dann vollständig vom Becken 4 und vom zumindest einen Deckel 6 umgeben und der Austritt von Spritzwasser und Verunreinigungen während des Betriebs der Filtrationsanlage 1 wird vermieden.

Wie insbesondere aus einer Zusammenschau der Fig. 1 bis 3 ersichtlich ist, umfasst die Filtereinheit 2 einen Träger 10, der um eine Drehachse 12 drehbar gelagert ist. Der Träger 10 umfasst eine Mehrzahl von entlang seines Umfangs angeordneten Trägersegmenten 14. Die Trägersegmente 14 müssen nicht durch Komponenten der Filtereinheit 2 physisch voneinander abgetrennt sein. In jedem Trägersegment 14 sind zwei erste Siebelemente 16 derart angeordnet, dass sie sich jeweils vom Umfang des Trägers 10 nach außen erstrecken und sich mit in radialer Richtung bezüglich der Drehachse 12 zunehmendem Abstand vom Umfang des Trägers 10 einander annähern. Weiterhin ist in jedem Trägersegment 14 ein zweites Siebelement 18 angeordnet, das sich entlang des Umfangs des Trägers 10 erstreckt. Die zwei ersten Siebelemente 16 und das zweite Siebelement 18 eines Trägersegments 14 sind in einem Dreieck angeordnet. Dabei erstreckt sich ein Schenkel des Dreiecks, der das zweite Siebelement 18 umfasst, entlang des Umfangs des Trägers 10 und die beiden anderen Schenkel des Dreiecks, die jeweils ein erstes Siebelement 16 umfassen, erstrecken sich vom Umfang des Trägers 10 nach außen und bilden eine radial nach außen gerichtete Spitze.

In Fig. 1 ist zu erkennen, dass bevorzugt der gesamte Umfang des Trägers 10 in Trägersegmente 14 unterteilt ist und mit ersten und zweiten Siebelementen 16, 18 versehen ist. Dadurch wird bezogen auf den Durchmesser des Trägers 10 eine maximale Filterfläche ermöglicht.

Die Filtrationsanlage 1 umfasst ferner einen Einlass 8 zum Zuführen einer zu filternden Flüssigkeit zur Filtereinheit 2. Der Einlass 8 ist radial innerhalb der zylindrischen Filtereinheit 2 angeordnet. Fig. 1 ist zu entnehmen, dass der Einlass 8 zum Zuführen der zu filternden Flüssigkeit zur Filtereinheit 2 bezüglich der Drehachse 12 radial innerhalb der ersten und zweiten Siebelemente 16, 18 angeordnet ist. Die zu filternde Flüssigkeit tritt durch den Einlass 8 in die Filtereinheit 2 ein und ein Flüssigkeitsstrom der zu filternden Flüssigkeit vom Einlass 8 in das die Filtereinheit 2 umgebende Becken 4 verläuft durch zumindest ein zweites und ein erstes Siebelement 18, 16. Dabei wird die zu filternde Flüssigkeit durch die ersten und zweiten Siebelemente 16, 18 gefiltert.

Die Porengröße der zweiten Siebelemente 18 ist größer als die Porengröße der ersten Siebelemente 16, wodurch zunächst größere Ablagerungen durch die zweiten Siebelemente 18 aufgefangen werden und dann eine bereits vorgefilterte Flüssigkeit zur weiteren Filtrierung durch die ersten Siebelemente 16 hindurchtritt. Im Vergleich zu herkömmlichen Filtrationsanlagen verschmutzen die ersten Siebelemente 16 dadurch weniger schnell und werden weniger stark beansprucht.

Der Einlass 8 kann an einem axialen Ende der Filtereinheit 2 an die Filtrationsanlage 1 angeflanscht sein oder sich als Einlassrohr in axialer Richtung der Drehachse 12 in die Filtereinheit 2, insbesondere in den Träger 10, hinein erstrecken, sodass die Filtereinheit 2 den Einlass 8 umgibt. Die Filtereinheit 2 kann dann drehbar auf einem solchen Einlassrohr gelagert sein. Es ist allerdings bevorzugt, dass die Filtereinheit 2, vorzugsweise der Träger 10, drehbar an einem Maschinengestell der Filtrationsanlage 1 gelagert ist.

In der dargestellten Ausführungsform umfasst die Filtrationsanlage 1 weiterhin eine Mehrzahl von Reinigungsdüsen 20a, 20b. Jede Reinigungsdüse 20a, 20b ist zum Reinigen eines ersten und/oder zweiten Siebelements 16, 18 eingerichtet. Die Reinigungsdüsen 20a, 20b sind dazu auf das oder die jeweils im Wirkbereich der Reinigungsdüsen 20a, 20b angeordneten Siebelemente 16, 18 gerichtet.

Es ist bevorzugt, dass mindestens eine Reinigungsdüse 20a zum Reinigen der zweiten Siebelemente 18 bzgl. der Drehachse 12 radial innerhalb der zweiten Siebelemente 18 angeordnet ist. Die zumindest eine Reinigungsdüse 20a kann dann unmittelbar auf das jeweils zu reinigende zweite Siebelement 18 gerichtet sein, ohne dass ein erstes Siebelement 16 zwischen der mindestens einen Reinigungsdüse 20a und dem jeweiligen zweiten Siebelement 18 angeordnet ist. Eine oder mehrere Reinigungsdüsen 20b zum Reinigen der ersten Siebelemente 16 können bezüglich der Drehachse 12 radial außerhalb der ersten Siebelemente 16 angeordnet sein. Es ist aber auch denkbar, dass nur entsprechende Reinigungsdüsen 20a oder 20b vorgesehen sind, die radial innerhalb oder radial außerhalb der Siebelemente 16, 18 angeordnet sind und sowohl zum Reinigen der ersten als auch der zweiten Siebelemente 16, 18 eingerichtet sind. Um eine möglichst gleichmäßige Reinigung der ersten und zweiten Siebelemente 16, 18 zu gewährleisten, sind bevorzugt mehrere Reinigungsdüsen 20a, 20b in einer Richtung parallel zur Drehachse 12 hintereinander angeordnet.

Die Filtrationsanlage 1 umfasst ferner eine Ablaufrinne 22, die dazu eingerichtet ist, mittels der Mehrzahl von Reinigungsdüsen 20a, 20b von den Siebelementen 16, 18 entfernte Ablagerungen aufzunehmen und aus der Filtereinheit 2 zu leiten. Vorzugsweise ist die Ablaufrinne 22 vertikal unter den Siebelementen 16, 18 angeordnet, auf die die Reinigungsdüsen 20a, 20b gerichtet sind, um die entfernten Ablagerungen aufzufangen.

Die zumindest eine Reinigungsdüse 20a zum Reinigen des zweiten Siebelements 18 ist in der dargestellten Ausführungsform an der Ablaufrinne 22 befestigt. Dadurch müssen keine zusätzlichen Befestigungsmittel innerhalb der Filtereinheit 2 zur Aufnahme und Lagerung der zumindest einen Reinigungsdüse 20a vorgesehen werden. Zudem lässt sich die zumindest eine Reinigungsdüse 20a dadurch möglichst nah am zu reinigenden zweiten Siebelement 18 anordnen.

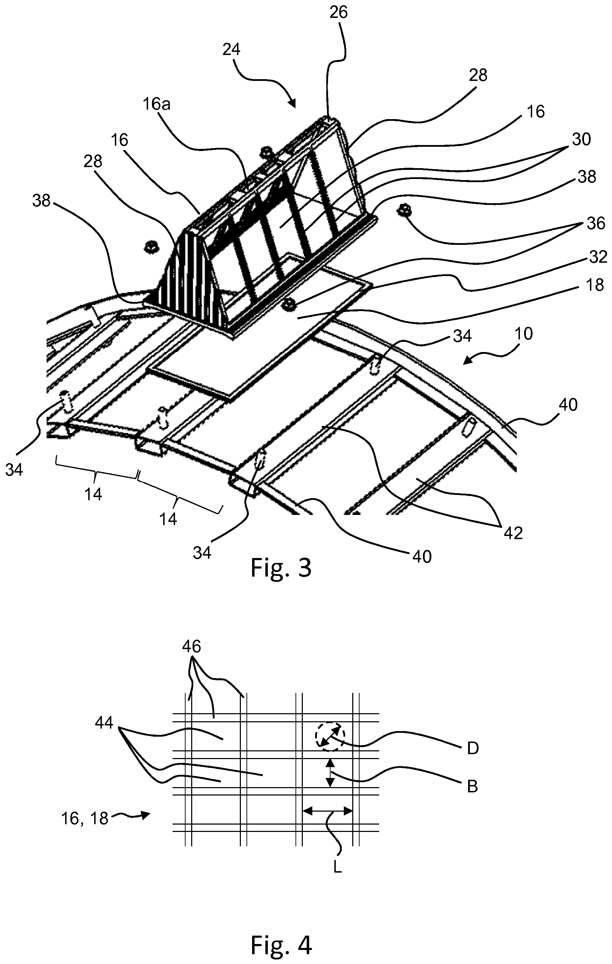

Ein bevorzugter Aufbau der Filtereinheit 2 wird nachfolgend unter Bezugnahme auf die Fig. 2 und 3 beschrieben. Die Filtereinheit 2 umfasst in der dargestellten bevorzugten Ausführungsform eine Mehrzahl von Siebrahmen 24. In jedem Trägersegment 14 ist vorzugsweise ein Siebrahmen 24 angeordnet. Ein Siebrahmen 24 weist einen dreieckigen Querschnitt auf. Ist der Siebrahmen 24 am Träger 10 montiert, verläuft die Ebene dieses Querschnitts senkrecht zur Drehachse 12 des Trägers 10. Zudem ist in diesem Zustand eine Spitze 26 des dreieckigen Querschnitts des Siebrahmens 24 bezüglich der Drehachse 12 radial nach außen gerichtet. Der Siebrahmen 24 umfasst zumindest die zwei ersten Siebelemente 16 des jeweiligen Trägersegments 14. Insbesondere sind die zwei ersten Siebelemente 16 in den zwei zur Spitze 26 des Siebrahmens 24 hin verlaufenden Schenkeln des Siebrahmens 24 angeordnet.

Bevorzugt weist jeder Siebrahmen 24 die Form eines dreiseitigen Prismas, insbesondere eines geraden und regelmäßigen Prismas auf. Eine Länge des Siebrahmens 24 ist parallel zur Drehachse 12 definiert und beträgt vorzugsweise zwischen 100 und 1500 mm, bevorzugt zwischen 200 und 800 mm, mehr bevorzugt zwischen 400 und 600 mm. Stirnflächen 28 des Siebrahmens 24 sind bevorzugt geschlossen, können in einer alternativen Ausführungsform jedoch jeweils mit einem Siebelement versehen sein.

Die radial nach außen gerichtete Spitze 26 des Siebrahmens 24 kann abgerundet oder abgeflacht sein und optional ein Siebelement 16a umfassen, um die verfügbare Filterfläche weiter zu erhöhen. Das Siebelement 16a kann dann ebenfalls durch Reinigungsdüsen 20a, 20b gereinigt werden und es wird vermieden, dass sich Ablagerungen in der Spitze 26 des Siebrahmens 24 festsetzen. Das Siebelement 16a kann Teil eines der beiden angrenzenden ersten Siebelemente 16 sein oder durch ein separates Siebelement 16a gebildet sein.

Jede der beiden bezüglich des Trägers 10 nach außen gerichteten Flanken des Siebrahmens 24 umfasst ein erstes Siebelement 16. Bevorzugt ist jedes erste Siebelement 16 einteilig ausgebildet und mit dem Siebrahmen 24 verbunden. Jedes erste Siebelement 16 kann aber auch mehrteilig ausgebildet sein, sodass mehrere separate Siebelement-Segmente derart mit dem Siebrahmen 24 verbunden sind, dass sie ein erstes Siebelement 16 bilden.

Die ersten Siebelemente 16 können fest oder lösbar mit dem Siebrahmen 24 verbunden sein. Zum Beispiel kann das erste Siebelement 16 mit dem Siebrahmen 24 verklebt oder in diesen eingegossen sein. Das erste Siebelement 16 kann aber auch ein Rahmenelement umfassen, in dem es aufgespannt ist und das in den Siebrahmen 24 eingesetzt und mit diesem verbunden ist.

Der Siebrahmen 24 kann weiterhin Stützelemente 30 zum Unterstützen der ersten Siebelemente 16 umfassen. Zum Beispiel sind die Stützelemente 30 als Streben ausgebildet, die sich von einem dem Träger 10 zugewandten Teil des Siebrahmens 24 entlang der nach außen gerichteten Flanken des Siebrahmens 24 zur Spitze 26 hin erstrecken. Bevorzugt sind die Stützelemente 30 außerhalb des ersten Siebelements 16 angeordnet. Ein von innen nach außen gerichteter Flüssigkeitsstrom durch das erste Siebelement 16 drückt das erste Siebelement 16 gegen die Stützelemente 30, die dem durch den Flüssigkeitsstrom auf das erste Siebelement 16 ausgeübten Druck entgegenwirken. Das erste Siebelement 16 kann auch mit den jeweiligen in seinem Bereich angeordneten Stützelementen 30 verbunden sein.

In einer besonders bevorzugten Ausführungsform sind die beiden ersten Siebelemente 16 und, falls vorhanden, das Siebelement 16a an der Spitze 26 durch ein und dasselbe Siebelement gebildet, dessen Abschnitte entsprechend angeordnet sind. Z.B. sind die beiden ersten Siebelemente 16 und das Siebelement 16a an der Spitze 26 durch eine durchgehende Gewebelage gebildet. Die zwei ersten Siebelemente 16 sowie das Siebelement 16a können aber auch jeweils durch separate Siebelemente gebildet sein.

Der Siebrahmen 24 eines Trägersegments 14 kann auch das zweite Siebelement 18 dieses Trägersegments 14 umfassen. Wie zuvor bezüglich der ersten Siebelemente 16 beschrieben, kann auch das zweite Siebelement 18 einteilig oder mehrteilig ausgebildet sein und fest oder lösbar mit dem Siebrahmen 24 verbunden sein. Das zweite Siebelement 18 ist an einer dem Träger 10 zugewandten und der Spitze 26 gegenüberliegenden Flanke des Siebrahmens 24 angeordnet. Der Siebrahmen 24 kann auch Stützelemente zum Unterstützen des zweiten Siebelements 18 umfassen, die dann bezüglich der Drehachse 12 radial außerhalb des zweiten Siebelements 18 angeordnet sind, um dem Druck des Flüssigkeitsstroms entgegenzuwirken.

Das zweite Siebelement 18 kann ein Rahmenelement 32 aufweisen, dass das zweite Siebelement 18 aufspannt. Das Rahmenelement 32 kann in den Siebrahmen 24 eingesetzt und mit diesem verbunden werden. Das Rahmenelement 32 kann aber auch zwischen dem Siebrahmen 24 und dem Träger 10 aufgenommen werden oder direkt mit dem Träger 10 im jeweiligen Trägersegment 14 verbunden werden. Insbesondere kann das zweite Siebelement 18, sei es mit dem Rahmenelement 32 oder ohne dem Rahmenelement 32, radial außerhalb aber auch radial innerhalb des Trägers 10 am Träger 10 angebracht sein.

Eine besonders einfache Montage des zweiten Siebelements 18 und des Siebrahmens 24 ist möglich, wenn das zweite Siebelement 18 und der Siebrahmen 24 übereinander am Träger 10 angeordnet werden und durch geeignete Befestigungsmittel an diesem fixiert werden. In der dargestellten Ausführungsform sind beispielsweise Bolzen 34, insbesondere Gewindebolzen, vorgesehen, die die Trägersegmente 14 in Umfangsrichtung des Trägers 10 begrenzen. Das zweite Siebelement 18, vorzugsweise mit Rahmenelement 32, und der Siebrahmen 24 werden zwischen in Umfangsrichtung des Trägers 10 nebeneinander angeordneten Bolzen 34 am Träger 10 angeordnet. Muttern 36 werden auf die Bolzen 34 geschraubt, wodurch der Siebrahmen 24 und das zweite Siebelement 18 am Träger 10 fixiert werden.

Bevorzugt weist der Siebrahmen 24 zwei in Längsrichtung parallel zur Drehachse 12 verlaufende Flanschabschnitte 38 auf, die zum einen eine flächige Anlage am Träger 10 ermöglichen und zum anderen eine Anlagefläche für die Muttern 36 bilden, sodass die Muttern 36 den Siebrahmen 24 über die Flanschabschnitte 38 am Träger 10 festlegen. Es ist weiterhin bevorzugt, dass Flanschabschnitte 38 von nebeneinander angeordneten Siebramen 24 an denselben Bolzen 34 angrenzen und mit derselben Mutter 36 niedergehalten werden. Der Montageaufwand und die Anzahl von Befestigungsmitteln wird dadurch reduziert. Alternativ können die Flanschabschnitte 38 auch Öffnungen aufweisen, durch die die Bolzen 34 hindurchtreten. Verschiedenste geeignete Befestigungsmittel sind dem Fachmann bekannt.

Ein besonders stabiler Aufbau des Trägers 10 wird erreicht, wenn dieser zwei Ringelemente 40 umfasst, die jeweils an einer Stirnseite des Trägers 10 angeordnet sind. Zwischen den Ringelementen 40 verläuft in axialer Richtung eine Mehrzahl von Leisten 42. Vorzugsweise begrenzen jeweils zwei Leisten 42 ein Trägersegment 14. Die Bolzen 34 können an den Ringelementen 40 und/oder den Leisten 42 vorgesehen sein.

Der Siebrahmen 24, insbesondere dessen Flanschabschnitte 38, können an den Leisten 42 anliegen. Vorzugsweise liegt der Siebrahmen 24 umlaufend dichtend an den Ringelementen 40 und den Leisten 42 an. Vorzugsweise ist auf der dem Träger 10 zugewandten Seite des Siebrahmens 24 eine Dichtung vorgesehen, um eine flüssigkeitsdichte Anlage zwischen dem Siebrahmen 24 und dem Träger 10 zu ermöglichen.

Es versteht sich, dass das zweite Siebelement 18 in einer alternativen Ausführungsform im Rahmen der Erfindung auch derart ausgebildet sein kann, dass es sich über mehrere Trägersegmente 14 erstreckt. Hierzu kann das zweite Siebelement 18 (mit oder ohne Rahmenelement 32) entsprechend der Kontur des Trägers 10 vorgeformt sein, eine ausreichende Flexibilität zur Anpassung an die Kontur des Trägers 10 aufweisen oder in den Träger 10 integriert sein.

In Fig. 4 ist zur Beschreibung von Poren 44 der ersten und zweiten Siebelemente 16, 18 ein Ausschnitt eines Siebelements 16, 18 vergrößert dargestellt. Die Poren 44 des Siebelements 16, 18 weisen einen rechteckigen Umriss auf. Der rechteckige Umriss jeder Pore 44 ist definiert durch eine Länge L und eine Breite B. Die Porengröße einer Pore 44 ist wiederum definiert als der Durchmesser der größten sphärischen Kugel, die die Pore 44 gerade noch passieren kann. Die größte sphärische Kugel für die dargestellten Poren 44 ist schematisch durch einen Kreis mit dem Durchmesser D angedeutet. Folglich ist bei einem rechteckigen Umriss der Poren 44 die jeweils kleinere Seitenlänge L oder B maßgeblich, im dargestellten Beispiel also die Breite B.

Da allerdings vermieden werden soll, dass schmale Partikel mit einer Breite kleiner der Porengröße der Poren 44 aber mit einer Länge, die größer als die Porengröße ist, das jeweilige Siebelement 16, 18 passieren können, sind bevorzugt weder die Länge L noch die Breite B rechteckiger Poren 44 wesentlich größer als die gewählte und vordefinierte Porengröße der Siebelemente 16, 18 ausgebildet. Es ist bevorzugt, dass die Länge L gleich der Breite B der Poren 44 ist, sodass diese einen quadratischen Umriss aufweisen.

Ein rechteckiger bzw. quadratischer Umriss der Poren 44 lässt sich besonders einfach dadurch erreichen, dass das erste Siebelement 16 und das zweite Siebelement 18 ein Gewebe umfassen, das vorzugsweise aus Rundfäden 46 gebildet ist.

Alternative Materialien und Filtergewebe sind dem Fachmann auf dem jeweiligen Anwendungsgebiet bekannt und können ebenso für das erste und das zweite Siebelement 16, 18 verwendet werden.

## Patentansprüche

1. Filtereinheit (2) zum Filtern einer Flüssigkeit mit:
einem Träger (10), der um eine Drehachse (12) drehbar gelagert ist und eine Mehrzahl von entlang seines Umfangs angeordneten Trägersegmenten (14) umfasst;
wobei in jeweils einem Trägersegment (14) der Mehrzahl von Trägersegmenten (14) zwei erste Siebelemente (16) derart angeordnet sind, dass sie sich jeweils vom Umfang des Trägers (10) nach außen erstrecken und sich mit in radialer Richtung bezüglich der Drehachse (12) zunehmendem Abstand vom Umfang des Trägers (10) einander annähern;
**dadurch gekennzeichnet, dass**
in jedem Trägersegment (14) der Mehrzahl von Trägersegmenten (14) ein zweites Siebelement (18) angeordnet ist, das sich entlang des Umfangs des Trägers (10) erstreckt, sodass die zwei ersten Siebelemente (16) und das zweite Siebelement (18) eines Trägersegments (14) in einem Dreieck angeordnet sind; und
die Porengröße des zweiten Siebelements (18) größer ist als die Porengröße der ersten Siebelemente (16), wobei die Porengröße der ersten und zweiten Siebelemente (16, 18) definiert ist als der Durchmesser der größten sphärischen Kugel, die gerade noch durch die Poren des jeweiligen Siebelements hindurchtreten kann.

2. Filtereinheit (2) nach Anspruch 1, **dadurch gekennzeichnet, dass** die Porengröße der ersten Siebelemente (16) zwischen 3 µm und 150 µm, vorzugsweise zwischen 5 µm und 100 µm, mehr bevorzugt zwischen 5 µm und 20 µm beträgt.

3. Filtereinheit (2) nach Anspruch 1 oder 2, **dadurch gekennzeichnet, dass** die Porengröße der zweiten Siebelemente (18) zwischen 40 µm und 200 µm, vorzugsweise zwischen 80 µm und 150 µm beträgt.

4. Filtereinheit (2) nach einem der vorangehenden Ansprüche, **dadurch gekennzeichnet, dass** die Porengröße des zweiten Siebelements (18) eines Trägersegments (14) das 2- bis 8-fache, vorzugsweise das 3- bis 6-fache, mehr bevorzugt das 3,5- bis 4,5-fache der Porengröße der ersten Siebelemente (16) des Trägersegments (14) beträgt.

5. Filtereinheit (2) nach einem der vorangehenden Ansprüche, **dadurch gekennzeichnet, dass** die zwei ersten Siebelemente (16) eines Trägersegments (14) dieselbe Porengröße aufweisen.

6. Filtereinheit (2) nach einem der vorangehenden Ansprüche, **dadurch gekennzeichnet, dass** Poren der ersten und zweiten Siebelemente (16, 18) einen rechteckigen Umriss, insbesondere einen quadratischen Umriss, aufweisen.

7. Filtereinheit (2) nach einem der vorangehenden Ansprüche, **dadurch gekennzeichnet, dass** die ersten und zweiten Siebelemente (16, 18) ein Gewebe umfassen, das vorzugsweise aus Rundfäden (46) gebildet ist.

8. Filtereinheit (2) nach Anspruch 7, **dadurch gekennzeichnet, dass** das Gewebe aus Edelstahl gebildet ist.

9. Filtereinheit (2) nach Anspruch 7, **dadurch gekennzeichnet, dass** das Gewebe aus Kunststoff, vorzugsweise aus säurefestem Kunststoff, gebildet ist.

10. Filtereinheit (2) nach einem der vorangehenden Ansprüche, **dadurch gekennzeichnet, dass** in jedem Trägersegment (14) der Mehrzahl von Trägersegmenten (14) ein Siebrahmen (24) angeordnet ist, der einen im Wesentlichen dreieckigen Querschnitt mit einer bezüglich der Drehachse (12) radial nach außen gerichteten Spitze (26) aufweist und der die zwei ersten Siebelemente (16) des jeweiligen Trägersegments (14) umfasst.

11. Filtereinheit (2) nach Anspruch 10, **dadurch gekennzeichnet, dass** der Siebrahmen (24) eines Trägersegments (14) auch das zweite Siebelement (18) des Trägersegments (14) umfasst.

12. Filtereinheit (2) nach Anspruch 10 oder 11, **dadurch gekennzeichnet, dass** der Siebrahmen (24) eines Trägersegments (14) lösbar am Träger (10) angebracht ist.

13. Filtrationsanlage (1) zum Filtern einer Flüssigkeit mit:
einer Filtereinheit (2) nach einem der Ansprüche 1 bis 12;
einem Becken (4) zur Aufnahme einer gefilterten Flüssigkeit, das die Filtereinheit (2) zumindest teilweise umgibt; und
einem Einlass (8) zum Zuführen einer zu filternden Flüssigkeit zur Filtereinheit (2), wobei der Einlass (8) bezüglich der Drehachse (12) des Trägers (10) der Filtereinheit (2) radial innerhalb der ersten und zweiten Siebelemente (16, 18) angeordnet ist.

14. Filtrationsanlage (1) nach Anspruch 13, **dadurch gekennzeichnet, dass** sie weiterhin eine Mehrzahl von Reinigungsdüsen (20a, 20b), vorzugsweise Spritzdüsen, und eine Ablaufrinne (22) umfasst;
wobei zumindest eine Reinigungsdüse (20a) der Mehrzahl von Reinigungsdüsen (20a, 20b) zum Reinigen der zweiten Siebelemente (18) vorgesehen ist; und
wobei die Ablaufrinne (22) dazu eingerichtet ist, mittels der Mehrzahl von Reinigungsdüsen (20a, 20b) entfernte Ablagerungen aufzunehmen und aus der Filtereinheit (2) zu leiten.

15. Filtrationsanlage (1) nach Anspruch 14, **dadurch gekennzeichnet, dass** die zumindest eine Reinigungsdüse (20a), die in Richtung des zweiten Siebelements (18) eines Trägersegments (14) ausgerichtet ist, bezüglich der Drehachse (12) des Trägers (10) der Filtereinheit (2) radial innerhalb der ersten und zweiten Siebelemente (16, 18) angeordnet ist und vorzugsweise an der Ablaufrinne (22) befestigt ist.

## Claims

1. Filter unit (2) for filtering a liquid, having:
a carrier (10) which is mounted so as to be rotatable about an axis of rotation (12) and comprises a plurality of carrier segments (14) arranged along its circumference;
wherein, in in each case one carrier segment (14) of the plurality of carrier segments (14), two first screen elements (16) are arranged in such a way that they each extend outwards from the circumference of the carrier (10) and approach one another as the distance from the circumference of the carrier (10) increases in a radial direction with respect to the axis of rotation (12);
**characterized in that**
a second screen element (18) is arranged in each carrier segment (14) of the plurality of carrier segments (14) and extends along the circumference of the carrier (10) such that the two first screen elements (16) and the second screen element (18) of a carrier segment (14) are arranged in a triangle; and
the pore size of the second screen element (18) is larger than the pore size of the first screen elements (16), wherein the pore size of the first and second screen elements (16, 18) is defined as the diameter of the largest spherical ball which can just still pass through the pores of the respective screen element.

2. Filter unit (2) according to Claim 1, **characterized in that** the pore size of the first screen elements (16) is between 3 µm and 150 µm, preferably between 5 µm and 100 µm, more preferably between 5 µm and 20 µm.

3. Filter unit (2) according to Claim 1 or 2, **characterized in that** the pore size of the second screen elements (18) is between 40 µm and 200 µm, preferably between 80 µm and 150 µm.

4. Filter unit (2) according to one of the preceding claims, **characterized in that** the pore size of the second screen element (18) of a carrier segment (14) is 2 to 8 times, preferably 3 to 6 times, more preferably 3.5 to 4.5 times, the pore size of the first screen elements (16) of the carrier segment (14) .

5. Filter unit (2) according to one of the preceding claims, **characterized in that** the two first screen elements (16) of a carrier segment (14) have the same pore size.

6. Filter unit (2) according to one of the preceding claims, **characterized in that** the pores of the first and second screen elements (16, 18) have a rectangular contour, in particular a square contour.

7. Filter unit (2) according to one of the preceding claims, **characterized in that** the first and second screen elements (16, 18) comprise a woven mesh, which is preferably formed from round threads (46).

8. Filter unit (2) according to Claim 7, **characterized in that** the woven mesh is formed from high-grade steel.

9. Filter unit (2) according to Claim 7, **characterized in that** the woven mesh is formed from plastic, preferably from acid-resistant plastic.

10. Filter unit (2) according to one of the preceding claims, **characterized in that** a screen frame (24) is arranged in each carrier segment (14) of the plurality of carrier segments (14) and has a substantially triangular cross section with an apex (26) which is directed radially outwards with respect to the axis of rotation (12) and comprises the two first screen elements (16) of the respective carrier segment (14).

11. Filter unit (2) according to Claim 10, **characterized in that** the screen frame (24) of a carrier segment (14) also comprises the second screen element (18) of the carrier segment (14).

12. Filter unit (2) according to Claim 10 or 11, **characterized in that** the screen frame (24) of a carrier segment (14) is attached detachably to the carrier (10).

13. Filtration installation (1) for filtering a liquid, having:
a filter unit (2) according to one of Claims 1 to 12;
a basin (4) for receiving a filtered liquid, which basin at least partially surrounds the filter unit (2); and
an inlet (8) for feeding a liquid to be filtered to the filter unit (2), wherein the inlet (8) is arranged radially within the first and second screen elements (16, 18) with respect to the axis of rotation (12) of the carrier (10) of the filter unit (2) .

14. Filtration installation (1) according to Claim 13, **characterized in that** said filtration installation furthermore comprises a plurality of cleaning nozzles (20a, 20b), preferably spray nozzles, and a run-off channel (22);
wherein at least one cleaning nozzle (20a) of the plurality of cleaning nozzles (20a, 20b) is intended for cleaning the second screen elements (18); and wherein the run-off channel (22) is configured to receive deposits removed by means of the plurality of cleaning nozzles (20a, 20b) and to guide said deposits out of the filter unit (2).

15. Filtration installation (1) according to Claim 14, **characterized in that** the at least one cleaning nozzle (20a) which is oriented in the direction of the second screen element (18) of a carrier segment (14) is arranged radially within the first and second screen elements (16, 18) with respect to the axis of rotation (12) of the carrier (10) of the filter unit (2) and is preferably fastened to the run-off channel (22).

## Revendications

1. Unité de filtration (2) pour filtrer un liquide, comprenant :
un support (10), qui est monté de manière rotative autour d'un axe de rotation (12) et qui comprend une pluralité de segments de support (14) agencés le long de sa périphérie ;
dans respectivement un segment de support (14) de la pluralité de segments de support (14), deux premiers éléments de tamisage (16) étant agencés de telle sorte qu'ils s'étendent respectivement vers l'extérieur à partir de la périphérie du support (10) et se rapprochent l'un de l'autre à une distance de la périphérie du support (10) qui augmente dans la direction radiale par rapport à l'axe de rotation (12) ;
**caractérisée en ce que**
dans chaque segment de support (14) de la pluralité de segments de support (14), un deuxième élément de tamisage (18) est agencé, qui s'étend le long de la périphérie du support (10) de telle sorte que les deux premiers éléments de tamisage (16) et le deuxième élément de tamisage (18) d'un segment de support (14) sont agencés en triangle ; et
la taille de pores du deuxième élément de tamisage (18) est supérieure à la taille de pores des premiers éléments de tamisage (16), la taille de pores des premiers et deuxièmes éléments de tamisage (16, 18) étant définie comme le diamètre de la plus grande bille sphérique qui peut tout juste passer à travers les pores de l'élément de tamisage respectif.

2. Unité de filtration (2) selon la revendication 1, **caractérisée en ce que** la taille de pores des premiers éléments de tamisage (16) est comprise entre 3 µm et 150 µm, de préférence entre 5 µm et 100 µm, plus préférablement entre 5 µm et 20 µm.

3. Unité de filtration (2) selon la revendication 1 ou 2, **caractérisée en ce que** la taille de pores des deuxièmes éléments de tamisage (18) est comprise entre 40 µm et 200 µm, de préférence entre 80 µm et 150 µm.

4. Unité de filtration (2) selon l'une quelconque des revendications précédentes, **caractérisée en ce que** la taille de pores du deuxième élément de tamisage (18) d'un segment de support (14) est de 2 à 8 fois, de préférence de 3 à 6 fois, plus préférablement de 3,5 à 4,5 fois la taille de pores des premiers éléments de tamisage (16) du segment de support (14).

5. Unité de filtration (2) selon l'une quelconque des revendications précédentes, **caractérisée en ce que** les deux premiers éléments de tamisage (16) d'un segment de support (14) présentent la même taille de pores.

6. Unité de filtration (2) selon l'une quelconque des revendications précédentes, **caractérisée en ce que** des pores des premiers et deuxièmes éléments de tamisage (16, 18) présentent un contour rectangulaire, notamment un contour carré.

7. Unité de filtration (2) selon l'une quelconque des revendications précédentes, **caractérisée en ce que** les premiers et deuxièmes éléments de tamisage (16, 18) comprennent un tissu, qui est de préférence formé à partir de fils ronds (46).

8. Unité de filtration (2) selon la revendication 7, **caractérisée en ce que** le tissu est formé à partir d'acier inoxydable.

9. Unité de filtration (2) selon la revendication 7, **caractérisée en ce que** le tissu est formé à partir de matière plastique, de préférence à partir de matière plastique résistante aux acides.

10. Unité de filtration (2) selon l'une quelconque des revendications précédentes, **caractérisée en ce que** dans chaque segment de support (14) de la pluralité de segments de support (14) est agencé un cadre de tamisage (24), qui présente une section transversale essentiellement triangulaire avec une pointe (26) orientée radialement vers l'extérieur par rapport à l'axe de rotation (12) et qui comprend les deux premiers éléments de tamisage (16) du segment de support respectif (14).

11. Unité de filtration (2) selon la revendication 10, **caractérisée en ce que** le cadre de tamisage (24) d'un segment de support (14) comprend également le deuxième élément de tamisage (18) du segment de support (14).

12. Unité de filtration (2) selon la revendication 10 ou 11, **caractérisée en ce que** le cadre de tamisage (24) d'un segment de support (14) est monté de manière amovible sur le support (10).

13. Installation de filtration (1) pour filtrer un liquide, comprenant :
une unité de filtration (2) selon l'une quelconque des revendications 1 à 12 ;
un bassin (4) pour recevoir un liquide filtré, qui entoure au moins partiellement l'unité de filtration (2) ; et
une entrée (8) pour amener un liquide à filtrer à l'unité de filtration (2), l'entrée (8) étant agencée radialement à l'intérieur des premiers et deuxièmes éléments de tamisage (16, 18) par rapport à l'axe de rotation (12) du support (10) de l'unité de filtration (2) .

14. Installation de filtration (1) selon la revendication 13, **caractérisée en ce qu'**elle comprend en outre une pluralité de buses de nettoyage (20a, 20b), de préférence de buses de pulvérisation, et une goulotte d'évacuation (22) ;
au moins une buse de nettoyage (20a) de la pluralité de buses de nettoyage (20a, 20b) étant prévue pour nettoyer les deuxièmes éléments de tamisage (18) ; et la goulotte d'évacuation (22) étant adaptée pour recevoir des dépôts enlevés au moyen de la pluralité de buses de nettoyage (20a, 20b) et les conduire hors de l'unité de filtration (2).

15. Installation de filtration (1) selon la revendication 14, **caractérisée en ce que** l'au moins une buse de nettoyage (20a), qui est orientée en direction du deuxième élément de tamisage (18) d'un segment de support (14), est agencée radialement à l'intérieur des premiers et deuxièmes éléments de tamisage (16, 18) par rapport à l'axe de rotation (12) du support (10) de l'unité de filtration (2) et est de préférence fixée à la goulotte d'évacuation (22).
